# EUROPÄISCHE PATENTANMELDUNG

(11) **EP 1 629 919 A2**
(43) Veröffentlichungstag der Anmeldung: **01.03.2006**
(21) Anmeldenummer: 05024541.4
(22) Anmeldetag: 19.04.2004
(51) Int. Cl.: B23G 7/00, B23G 5/18, B23G 1/34

(54) **Werkzeug und Verwendung desselben zur Herstellung von Gewinden**

(30) Priorität: 22.04.2003 DE 10318203
(62) Teilanmeldung aus: 04728162.1
(71) Anmelder: GÜHRING, Jörg, 72458 Albstadt (DE)
(72) Erfinder: Mann, Jürgen, 72459 Albstadt-Laufen (DE)
(74) Vertreter: Winter, Brandl, Fürniss, Hübner Röss, Kaiser, Polte Partnerschaft Patent- und Rechtsanwaltskanzlei

(57) **Zusammenfassung**

Beschrieben wird ein Werkzeug zur Herstellung von Gewinden, insbesondere von Innengewinden, das ein Herstellungsverfahren ermöglicht, bei dem die Innenoberfläche (16) einer Werkstückbohrung mittels spanloser Druckumformung bearbeitet wird. Das Werkzeug hat einen Formkopf (18; 118) mit zumindest zwei nach der Art eines Gewindefräsers ausgebildeten und in konstantem axialen Abstand (T) zueinander stehenden Profilvorsprüngen (20), die über den Umfang durchgehend und mit sich über den Umfang verändernder radialer Erstreckung (ERMIN, ERMAX) ausgebildet sind, so dass im Bereich eines jeden Profilvorsprungs (20) über den Umfang zumindest ein Drückstollen (22; 122) entsteht. Die Profilvorsprünge (20) bilden mit der sich über den Umfang ändernden radialen Erstreckung (ERMIN, ERMAX) über den Umfang jeweils mehrere Drückstollen (22; 122) aus. Die Drückstollen (122) benachbarter Profilvorsprünge sind in Umfangsrichtung zueinander versetzt. Um Gewinde unterschiedlicher Nenndurchmesser besonders wirtschaftlich und mit verbesserter Gefügequalität im Bereich des Gewindes herstellen zu können, wird das Gewinde dadurch gebildet, dass das Werkzeug zunächst an einer Umfangsstelle der Werkstückbohrung in das Werkstück eingefahren wird, vorzugsweise auf volle Gewindetiefe gebracht wird, und unter Beibehaltung der zur Achse der Werkstückbohrung eingestellten Exzentrizität der Drehachse eine 360° durchlaufende Relativ-Kreisbewegung (Zirkularbewegungs) bezüglich der Achse der Werkstückbohrung ausführt, während der Formkopf gleichzeitig eine konstante axiale Relativ-Vorschubbewegung um das Maß der herzustellenden Gewindsteigung ausführt.

## Beschreibung

Die Erfindung betrifft ein Werkzeug zur Herstellung von Gewinden, insbesondere von Innengewinden, gemäß dem Oberbegriff des Anspruchs 1, auf eine Verwendung eines solchen Werkzeugs in Verbindung mit einer Vorrichtung nach Anspruch 13 und mit einem Verfahrensablauf nach den Ansprüchen 16 bis 21, sowie auf einen Sinterrohling zur Herstellung eines solchen Werkzeugs nach Anspruch 22.

Es sind verschiedene Methoden zur Herstellung von sogenannten Muttergewinden, d.h. Innengewinden bekannt. Weit verbreitet ist das Gewindeschneiden, bei dem ein Gewindebohrwerkzeug, das mit Schneidstollen und Spannuten ausgestattet ist, mit dem durch die Steigung des Werkzeugs vorbestimmtem Vorschub und synchronisierter Drehzahl in eine Werkstückbohrung mit vorbestimmtem Kernmaß eingefahren wird. Dabei erfolgt eine spanabhebende Bearbeitung des Werkstücks.

Um insbesondere in den tragenden Gewindeflanken eine höhere Festigkeit zu erzielen, wendet man das sogenannte Gewindeform-Verfahren an, bei dem ein Gewindeformer oder Gewindefurcher - auch Gewindedrücker genannt - zum Einsatz kommt und mit dem der Werkstoff kalt verformt wird, ohne dass - wie beim Gewindeschneiden - der sogenannte "Faserverlauf" im Werkstoff unterbrochen wird. Ein wesentlicher Vorteil im Vergleich zum Gewindeschneiden besteht ferner darin, dass beim Gewindeformen keine Späne entstehen.

Beim Gewindeformen wird ein schraubenförmiger, zur Ausbildung von Drückstollen mit einem Polygon versehener Gewindeteil mit einem gleichmäßigen, der Steigung des Gewindes entsprechenden Vorschub in das vorgebohrte Werkstück eingeschraubt. Dabei drückt sich das Gewindeprofil stufenweise über den Anlauf des Gewindeteils in den Werkstoff des Werkstücks, wodurch in der Stauchzone die Spannung so hoch wird, dass die Stauchgrenze überschritten und der Werkstoff plastisch verformt wird. Das Material weicht radial aus, fließt entlang des Gewindeprofils in den freien Zahngrund und bildet so den Kerndurchmesser des Muttergewindes. Der Ausformgrad des Gewindes lässt sich über den Vorbohrdurchmesser steuern.

Der besondere Vorteil besteht darin, dass die erzielbare Gefügeverbesserung dazu führt, dass die Belastbarkeit des Gewindes auch bei 50 % Tragtiefe noch ausreichend ist. Weil für dieses Verfahren die Schmierung von entscheidender Bedeutung ist, müssen aber im Werkzeug zwischen den Drückstollen Schmiernuten ausgebildet werden.

Ein Nachteil dieses Verfahrens besteht darin, dass für jedes Gewinde ein entsprechend dem Gewindedurchmesser gesondertes Formwerkzeug erforderlich ist, die Geometrie des Anlaufs zur Steuerung der Arbeitsleistung des Gewindeformers relaiv schwer zu optimieren ist, und die Schnittgeschwindigkeits- und Vorschubwerte nicht unabhängig voneinander gewählt werden können.

Schließlich ist es bekannt, Innengewinde zu fräsen. Hier wird das Gewinde durch die Aneinanderreihung der Schnittlinien des Gewindefräsers erzeugt. Die Gewindesteigung wird durch die Maschine realisiert, sie entspricht der sogenannten "Teilung" des Gewindefräsers, d.h. dem axialen Abstand der Fräser-Zahnreihen.

Ein wesentlicher Vorteil dieses Verfahrens besteht darin, dass sich mit ein und demselben Fräser Gewinde mit verschiedenen Durchmessern und gleicher Steigung herstellen lassen. Im Vergleich zu geschnittenen Gewinden ergibt sich der weitere Vorteil, dass das gefräste Gewinde über nahezu die gesamte eingesetzte Werkzeuglänge voll ausgebildet ist. Von Nachteil ist bei diesem Herstellungsverfahren, dass aufgrund der zerspanenden Bearbeitung das Gefüge im Bereich der geschnittenen Zähne quasi zerstört wird, wodurch die Tragkraft des Gewindes beschränkt bleibt.

Der Erfindung liegt deshalb die Aufgabe zugrunde, ein Werkzeug und eine Verwendung eines solchen Werkzeugs mit einer Vorrichtung zur Herstellung von Gewinden, insbesondere von Innengewinden bereit zu stellen, mit dem Gewinde unterschiedlicher Nenndurchmesser besonders wirtschaftlich und mit verbesserter Gefügequalität im Bereich des Gewindes hergestellt werden können.

Diese Aufgabe wird hinsichtlich des Werkzeugs durch die Merkmale des Anspruchs 1, gelöst. Die Ansprüche 14 bis 21 betreffen vorteilhafte Verwendungen dieses Werkzeugs mit einer besonders geeigneten Vorrichtung (Anspruch 14 und 15) und in Verbindung mit einem besonders geeigneten Verfahren zur Handhabung des Werkzeugs (Ansprüche 16 bis 21).

Mit dem erfindungsgemäßen, neu gestalteten Werkzeug Werkzeug kann das Gewinde - wenn es entsprechend Anspruch 16 ff. verwendet wird - quasi in die Innenoberfläche der Werkstückbohrung "gehämmert" werden. Das Werkzeug hat einen Formkopf, der die Gestaltungsmerkmale eines Gewindefräsers mit denjenigen eines Gewindeformers kombiniert, und zwar derart, dass der Formkopf mit zumindest einem, vorzugsweise aber zumindest zwei nach der Art eines Gewindefräsers ausgebildeten und in konstantem axialen Abstand zueinander stehenden Profilvorsprüngen bzw. Zähnen ausgestattet wird, die über den Umfang durchgehend, aber mit sich über den Umfang verändernder radialer Erstreckung ausgebildet sind, so dass im Bereich eines jeden Profilvorsprungs über den Umfang zumindest ein Drückstollen ähnlich wie bei einem Gewindeformer entsteht. Die Drückstollen benachbarter Profilvorsprünge sind dabei in Umfangsrichtung zueinander versetzt.

Es hat sich überraschender Weise gezeigt, dass die bei dieser Art der spanlosen Bearbeitung mit Fräskinematik auf den Schaft des Werkzeugs einwirkenden Radialkräfte ohne weiteres ohne übermäßige radiale Auslenkung des Formkopfs aufgenommen werden können, und zwar selbst dann, wenn der Formkopf eine Vielzahl von Profilvorsprüngen hat und damit in der Lage ist, selbst relativ lange Gewinde mit einer Zirkularbewegung herzustellen. Denn schon allein über die Drehzahl des Formkopfs und die davon unabhängige Geschwindigkeit der Zirkularbewegung des Werkzeugs lässt sich die von einem Drückstollen zu leistende Verformungsarbeit einfach steuern und damit ausreichend klein halten, um den Schaft des Werkzeugs nicht übermäßig beanspruchen zu müssen. Weitere Möglichkeiten der Eingrenzung der auf den Formkopf einwirkenden Radialkräfte bestehen darin, die Zahl der Drückstollen pro Profilvorsprung zu variieren.

Neben der Sicherstellung einer verbesserten Tragkraft des Gewindes aufgrund besserer Gefügestrukturen hat das erfindungsgemäße Konzept der Gewindeherstellung den zusätzlichen Vorteil, dass über die Maschinensteuerung die Möglichkeit geschaffen wird, auf die DurchmesserToleranzen im Bereich des Nenn- und/oder des Flankendurchmessers bei der Herstellung Einfluss zu nehmen. Ein weiterer wesentlicher Vorteil des erfindungsgemäßen Konzepts der Gewindeherstellung besteht darin, dass keine Späne entstehen.

Vorteilhafte Weiterbildungen sind Gegenstand der Unteransprüche.

Die Weiterbildung des Anspruchs 2 hat den Vorteil, dass die Einfahrberwegung zur Zentrierung des Werkzeugs genutzt werden kann und dass die Einformung des Gewindes mit einer einzigen Zirkularbewegung fertig gestellt werden kann.

Wenn die die radial nach außen gerichtete Bewegung des Formkopfs entlang einer bogenförmigen Kurve erfolgt, vorzugsweise in Form einer 180° -Einfahrschleife, so dass die bogenförmige Kurve beim Eintreten der Profilvorsprünge in das Werkstück eine Bewegungskomponente in Richtung der sich anschließenden Zirkularbewegung hat, wird die Werkzeugbelastung beim Eintauchen das Werkstück am niedrigsten. Weil die Drückstollen axial benachbarter Profilvorsprünge in Umfangsrichtung zueinander versetzt sind, zum Beispiel in Form einer Wendel, kann die Gesamt-Radialkraft, die beim Drückvorgang des Innengewindes auf den Formkopf einwirkt, weiter verringert werden.

Wenn die Profilvorsprünge, d.h. die geometrische Auslegung des Polygons, mit der sich über den Umfang ändernden radialen Erstreckung über den Umfang jeweils mehrere Drückstollen ausbilden, wird die Effektivität des Werkzeugs gesteigert.

Die Drückstollen können über den Umfang gleichmäßig, aber auch ungleich verteilt sein, was den Vorteil der Verringerung der Schwingungsneigung hat.

Die Verringerung der Gesamt-Radialkraft, die beim Drückvorgang des Innengewindes auf den Formkopf einwirkt, kann dann herstellungstechnisch einfach sichergestellt werden, wenn - entsprechend Anspruch 5 - die axial benachbarten Drückstollen des Formkopfs jeweils entlang einer Wendel liegen.

Die Parameter des Verfahrens, gemäß dem das erfindungsgemäße Werkzeug vorteilhafterweise verwendet wird, können entsprechend dem zu bearbeitenden Werkstoff in weiten Grenzen optimiert werden. Durch die Kinematik der Ansprüche 20 und 21 lassen sich in Verbindung mit wechselnder axialer Vorschubbewegung des Werkzeugs links- bzw. rechtsgängige Gewinde mit ein und demselben Werkzeug herstellen.

Vorteilhafte Ausgestaltungen des Werkzeugs sind Gegenstand der Unteransprüche 2 bis 13, vorteilhafte Verwendungen Gegenstand der Ansprüche 14 bis 21.

Wenn die Tiefe der Nuten zwischen benachbarten Profilvorsprüngen über den Umfang variiert, kann man in vorteilhafter Weise Einfluß auf das Fließverhalten des plastischen Werkstoffs nehmen.

Für gewisse Werkstoffe kann es von Vorteil sein, die Tiefe der Nuten zwischen benachbarten Profilvorsprüngen über den Umfang im Wesentlichen gleich zu halten.

Wenn das Werkzeug - entsprechend Anspruch 8 - insgesamt aus einem hochfesten Werkstoff, vorzugsweise aus einem Hartstoff, insbesondere einem Hartmetall-Werkstoff oder einem amderen hochfesten Sinterwerkstoff besteht, wird die Stabilität des Werkzeugs besonders hoch, was sich besonders günstig auf die Biegeverformung aufgrund der einwirkenden Gesamt-Radialkraft auswirkt.

Ebenso könnten diese Werkzeuge aus einer Kombination von verschiedenen Werkstoffen hergestellt werden. Z.B. ist es möglich in geeignete Aufnahmen in einem Träger aus einem Trägermaterial, beispielsweise gehärtetem oder weichen Stahl (oder Schwermetall), Schnellarbeitsstahl HSS oder HSSE, Aluminiumlegierungen, Hartmetall oder andere Sinterwerkstoffe Leisten aus einem anderen Werkstoff einzusetzen. Beispielhaft erwähnt seien hier nur Hartmetalle, Cermets, PkD, CBN, Keramik etc. Mit diesen Werkstoffen werden am fertigen Werkzeug die Drückstollen gebildet.

Die eingesetzten Leisten können in ihrer Form unterschiedlich ausgeführt sein, z.B. zylindrisch, konisch, rund etc. Die Verbindung der Leisten mit dem Träger kann dabei in unterschiedlicher Weise erfolgen, wie z.B. Löten Schrauben, Klemmen, Kleben oder Schweißen.

Vorzugsweise ist der Formkopf zumindest im Bereich der Drückstollen mit einer Beschichtung versehen. Es können alle gängigen Beschichtungen verwendet werden, mit denen eine Reibungsverminderung und/oder eine Verschleißminderung erzielbar ist. Besonders bevorzugt ist eine Hartstoffschicht, wie z.B. aus Diamant, vorzugsweise nanokristallinem Diamant, aus TiN, TiAlN oder aus TiCN, oder eine Mehrlagen-Schicht. Auch eine Schmierschicht, beispielsweise aus dem unter der Bezeichnung "MOLYGLIDE" bekannten MoS2 wäre denkbar.

Besonders gute Standzeiten und Bearbeitungsparameter ergeben sich mit einer Beschichtung nach den Ansprüchen 10 bis 13.

Vorzugsweise wird das Werkzeug mit einer Vorrichtung nach Anspruch 14 oder 15 verwendet, die sich in besonderer Weise zur Durchführung des Gewinde-Herstellungsverfahrens nach den Ansprüchen 16 bis 21 eignet. Die erforderlichen Funktionen der Vorrichtung lassen sich beispielsweise mit einer Dreiachsensteuerung einer 3-D-CNC-Werkzeugmaschine verwirklichen lassen.

Im Einzelnen lassen sich bei dem erfindungsgemäßen Werkzeug besonders wirtschaftlich Hartstoffe, insbesondere Sinterwerkstoffe einsetzen, besonders bevorzugt Vollhartmetall, aber auch sogenannte Cermet-Werkstoffe. Dabei ist für ein besonders wirtschaftliches Herstellungsverfahren gesorgt. Denn die Polygonform des Querschnitts des Formkopfs kann bereits im Sinterrohling ausgebildet werden, so dass die Nachbearbeitung im Wesentlichen auf den Bereich der Gewindefurchen beschränkt bleiben kann.

Es können auch Cermets verwendet werden, d. h. Sinterwerkstoffe, die als wesentlichen Härteträger die Carbide und Nitride des Titans (TiC, TiN) besitzen und bei denen als Bindephase überwiegend Nickel zum Einsatz kommt. Bei diesem Werkstoff wirken sich die Kriterien wie geringe chemische Affinität zu Stahllegierungen, geringer Wärmeleitkoeffizient, höhere Warmhärte und Feinkörnigkeit des Gefüges besonders vorteilhaft auf das Einsatzgebiet aus. Der Gefügeaufbau von Cermets ist inzwischen soweit erforscht, dass es durch geeignete Steuerung der Prozessparameter gelingt, sehr feinkörniges Gefüge mit hoher Zähigkeit bereitzustellen. Dabei kann von Vorteil sein, in den Werkstoff Titannitrid einzubringen, was aufgrund seiner hohen thermodynamischen Stabilität eine geringe Löslichkeit in Eisen aufweist und damit das Diffusions- und Reibverhalten positiv beeinflusst.

Selbständiger Gegenstand der Erfindung ist darüber hinaus ein Sinterrohling für den Formkopf eines Gewindeformers, der im gleichmäßigen Axialabstand zueinander liegende Profilvorsprünge mit vorgeformten Drückstollen hat, so dass die Endbearbeitung des Formkopfs nach dem Fertigsintern - in der Regel das Schleifen auf Endmaß - auf ein Minimum beschränkt bleiben kann. Diese von Sinterrohlingen gebildeten Formköpfe können vom Hersteller als Halbzeuge bezogen werden. Vorteilhafter Weise werden diese Formköpfe dann mit Aufmaßen in der Größenordnung von lediglich 0.5 mm bezogen auf Nennmaß geschliffen.

Weitere vorteilhafte Ausgestaltungen der Erfindung sind Gegenstand der übrigen Unteransprüche.

Nachstehend werden anhand schematischer Zeichnungen Ausführungsbeispiele der Erfindung näher erläutert. Es zeigen:
Figur 1 eine schematische Seitenansicht eines Werkzeugs zur Einformung eines Innengewindes nach einem neuen Verfahren;
Figur 2 den schematischen Schnitt gemäß II-II in Figur 1;
Figur 3 eine schematische perspektivische Ansicht einer besonders vorteilhaften Variante des für das Werkzeug verwendeten Formkopfs als Rohling vor dem Einbringen von Gewindeprofilvorsprüngen;
Figur 4 eine Darstellung zur Verdeutlichung, wie die einzelnen Arbeitsschritte zur Herstellung eines Innengewindes mittels eines erfindungsgemäßen Werkzeugs aneinander gereiht werden; und
Figur 5 eine schematische Ansicht zur Veranschaulichung einer bevorzugten Einfahrschleife für das Formwerkzeug.

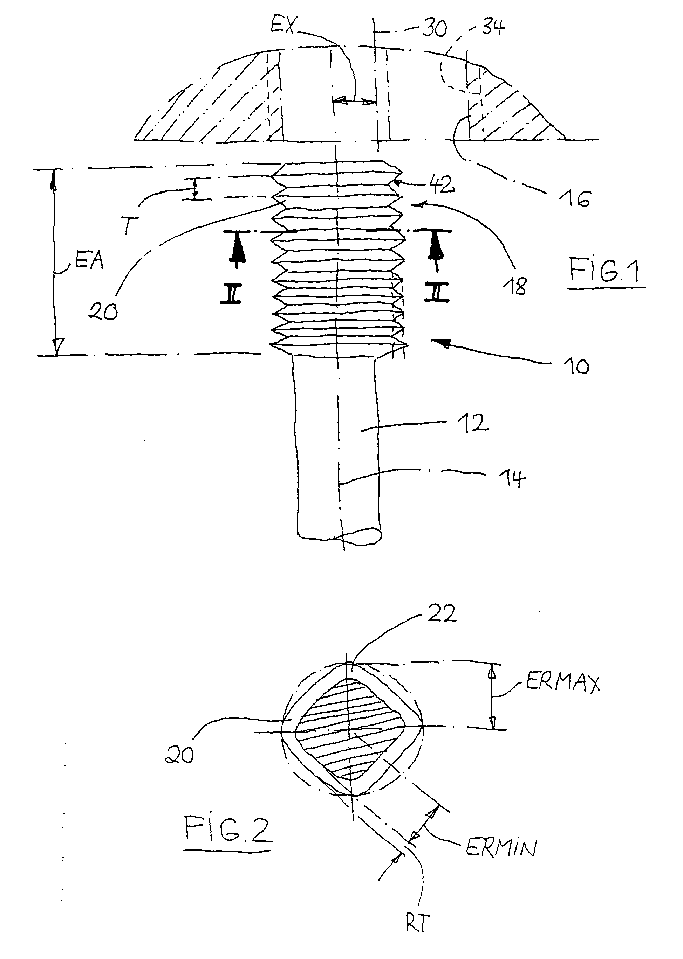

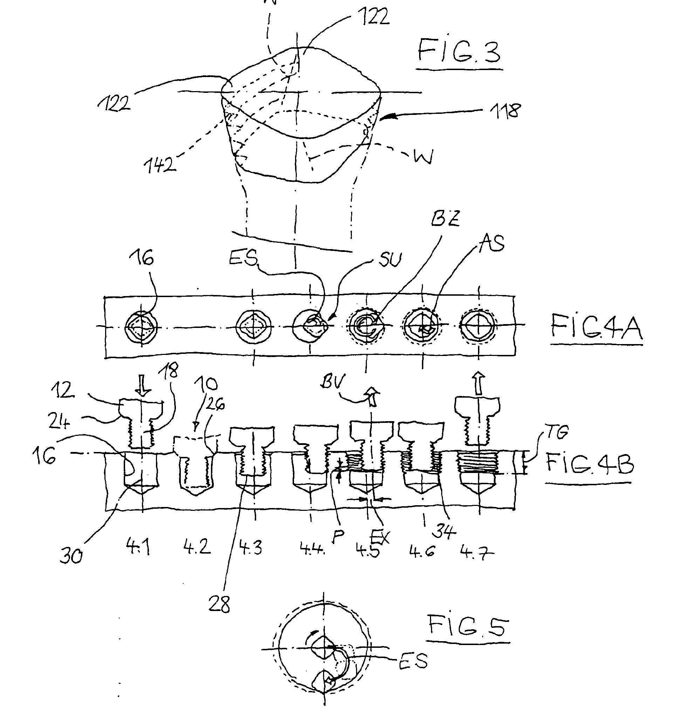

In den Figuren 1 und 2 ist schematisch ein Werkzeug gezeigt, mit dem ein besonderes Verfahren zur Herstellung von Gewinden, insbesondere von Innengewinden, durchgeführt werden kann und das grundsätzlich vom Aufbau her dem erfindungsgemäßen Werkzeug entspricht.

Es handelt sich um einen um eine Schaftachse 14 drehantreibbaren Gewindeformer 10, mit dem die Gewindegänge spanlos durch Druckumformung aus der Oberfläche des Werkstücks, nämlich aus der Innenoberfläche einer Werkstückbohrung, die in Figur 1 mit strichpunktierter Linie 16 angedeutet ist, heraus getrieben wird.

Das Werkzeug 10 hat einen Schaft 12 und einen Formkopf 18.

Der Formkopf 18 hat eine Vielzahl von nach der Art eines Gewindefräsers ausgebildeten und in konstantem axialen Abstand T (Teilung) zueinander stehenden Profilvorsprüngen 20, die - wie sich aus der Figur 2 ersehen lässt - über den Umfang durchgehend sind. Sie haben - wie ebenfalls aus Figur 2 erkennbar - eine sich über den Umfang verändernde radiale Erstreckung, die zwischen ERMAX und ERMIN liegt, so dass im Bereich eines jeden Profilvorsprungs 20 über den Umfang zumindest ein Drückstollen 22 (bei der Ausführungsform nach Figur 1 und 2 sind es vier Drückstollen 22) entsteht.

Die Profilvorsprünge 20 sind axial zueinander um das Maß der herzustellenden Gewindsteigung versetzt, d.h. das Maß T entspricht der Gewindesteigung des herzustellenden Gewindes.

Man erkennt aus der Darstellung der Figur 2, dass der Kernquerschnitt des Formkopfs 18 eine Polygonform hat und dass die radiale Tiefe RT der Profilvorsprünge 20 über den gesamten Umfang im Wesentlichen gleich bleibt. Es soll aber bereits an dieser Stelle hervor gehoben werden, dass dieses Detail nicht unabdingbar ist. Auch kann die Umfangskontur des Kernquerschnitts und/oder die Kontur der Einhüllenden der Profilvorsprünge 20 ohne weiteres variiert werden, so lange die Funktion der Drückstollen 22 aufrecht erhalten bleibt.

Der Formkopf 18 hat eine axiale Erstreckung EA, die im Wesentlichen der Länge TG (siehe Position 4.5 der Figur 4) des zu erzeugenden Gewindes entspricht.

Man erkennt aus der Figur 2, dass die Drückstollen 22 über den Umfang gleichmäßig verteilt sind. Sie können aber auch ungleich verteilt sein, um die Schwingungsneigung des Werkzeugs zu verringern.

Das Herstellungsverfahren unter Zuhilfenahme des erfindungsgemäßen Gewindeformwerkzeugs wird unter Bezug auf die Figur 4 näher beschrieben:

Das Gewinde wird dadurch gebildet, dass das nach der Art eines Gewindefräsers mit den zumindest zwei in konstantem Abstand T zueinander stehenden Profilvorsprüngen 20 ausgestattete Schaftwerkzeug 10 in Drehbewegung versetzt und - wie in Fig. 4A auf der linken Seite unter Position 4.1 dargestellt - zentrisch oberhalb der Werkstückbohrung 16 positioniert wird. Das Werkzeug 10 kann so ausgebildet sein, dass im Übergangsbereich zum Schaft 12 eine Schneide 24 zur Anbringung einer Fase 26 vorhanden ist, was in der Position 4.2. angedeutet ist.

Anschließend wird das Werkzeug 10 axial so weit aus dem Zentrum parallel zu sich selbst heraus gefahren, bis die Werkzeugspitze 28 - wie in Position 4.3 gezeigt - das Sollmaß TG der Gewindetiefe erreicht hat. Dann erfolgt die radiale Zustellung des Werkzeugs 10, und zwar in der Weise, dass es - wie in Position 4.4 gezeigt - zunächst an einer Umfangsstelle SU eine Radialposition erreicht, die für das Eindrücken des Gewindes unter plastischer Verformung des Werkstücks auf Sollmaß des Flanken- und/oder Nenndurchmessers erforderlich ist. Dieses Maß wird in der Regel empirisch bestimmt und hängt u.a. von den Werkstoffparametern (Fließverhalten) des Werkstücks und den Parametern des Formvorgangs ab.

Die Bahn, auf der das Werkzeug 10 aus dem Zentrum der Werkstückbohrung 16 heraus in die Position SU gebracht wird ist mit dem Pfeil ES bezeichnet. Diese Kurve beschreibt quasi eine Art Einfahrschleife, auf die später noch näher eingegangen werden soll.

Nachdem das Werkzeug 10 somit auf volle Bearbeitungs- bzw. Gewindetiefe gebracht ist, führt es unter Beibehaltung der zur Achse 30 der Werkstückbohrung 16 eingestellten Exzentrizität EX der Drehachse 14 eine 360° durchlaufende Kreisbewegung (Zirkularbewegung BZ, siehe Pfeil in Position 4.5) um die Achse 30 der Werkstückbohrung 16 aus, während der Formkopf 18 gleichzeitig eine konstante axiale Vorschubbewegung BV um das Maß der herzustellenden Gewindsteigung P ausführt. Dabei wird das Material des Werkstücks durch die sukzessive in Eingriff tretenden Drückstollen quasi einer kontinuierlichen Druckumformung nach der Art einer Hämmerbearbeitung unterworfen, die das Material zum Fließen bring, so dass es gesteuert in die Nuten 42 zwischen den Profilvorsprüngen 20 eindringen kann. Das Gewinde erhält auf diese Weise eine ähnliche Qualität und Geometrie im Bereich der Gewindezähne wie beim Gewindeformen.

Wenn diese Zirkularbewegung (BZ) abgeschlossen ist, ist das Gewinde fertig eingeformt. Durch Korrektureingriffe im Bereich der Steuerung für die Zirkularbewegung kann während des Ausformvorgangs gezielt und laufend Einfluss auf die Toleranz des Flanken- und des Nenndurchmessers genommen werden, was der Einsatzdauer des Werkzeugs 10 zugute kommt.

Wenn das Werkzeug 10 die Position SU wieder erreicht hat, wird es auf einer Kurve AS radial nch innen gefahren - wie in Position 4.6 gezeigt -, so dass die Profilvorsprünge 20 des Formkopfs 18 außer Eingriff mit dem hergestellten Innengewinde 34 gelangen.

Anhand der Figuren 1, 2 und 4 ist das Verfahren zum "spanlosen Gewindefräsen" mittels eines Werkzeugs 10 beschrieben worden, das eine sich in axialer Richtung unveränderten Querschnitt hat. Damit kommen die Drückstollen 22 aller Profilvorsprünge 20 jeweils gleichzeitig in Eingriff mit dem zu verdrängenden Werkstoff des Werkstücks. Zur Beherrschung der dadurch auftretenden und vom Schaft 12 des Werkzeugs 10 aufzunehmenden Kräfte wird der Vorschub in Zirkularrichtung derart auf die Drehzahl des Werkzeugs abgestimmt, dass die Verformungsarbeit der im Eingriff befindlichen Drückstollen 22 möglichst klein bleibt.

Um diese Kräfte noch gleichmäßiger auf das Werkzeug 10 einbringen zu können, sind - entsprechend der Figur 3 - erfindungsgemäß die Drückstollen 122 benachbarter Profilvorsprünge in Umfangsrichtung zueinander versetzt. Vorteilhafter Weise liegen die axial benachbarten Drückstollen 122 des Formkopfs 118 jeweils entlang einer Wendel, die in Figur 3 mit der gestrichelten Linie W angedeutet ist. Mit anderen Worten, die Figur 3 zeigt einen vorgefertigten oder vorbearbeiteten Rohling für eine Formkopf 118, in den dann die Profilnuten 142 eingearbeitet werden, um den Formkopf fertig zu stellen.

Figur 5 schließlich zeigt in etwas vergrößertem Maßstab ein Detail der Ausbildung der Einfahrschleife ES. Man erkennt, dass die Bewegung entlang einer durch 180° geführten Kreisbewegung erfolgt, was sich positiv auf die Werkzeugbelastung auswirkt. Es ist jedoch - insbesondere bei größerer Durchmesserdifferenz zwischen Werkzeug und Gewinde gleichermaßen vorteilhafte, eine Viertelkreiseinfahrschleife zu wählen, die leichter zu programmieren ist.

Das vorstehend beschriebene Werkzeug kann gleichermaßen für die Herstellung von Rechts-, wie von Linksgewinden verwendet werden, wobei diesbezüglich nur die Vorschubrichtung BV und ggf. die Drehrichtung des Werkzeugs umgekehrt werden muß, so dass im Gleichlauf- und/oder Gegenlauf verformt werden kann.

Zur zusätzlichen Verbesserung der Bearbeitungsqualität kann der Formkopf zumindest im Bereich der am höchsten beanspruchten Abschnitte, d.h. im Bereich der Drückstollen 22, 122 mit einer Beschichtung versehen sein, die vorzugsweise als Hartstoffschicht ausgebildet ist. Für diese Hartstoffschicht kommt z.B. Diamant, vorzugsweise nanokristalliner Diamant in Frage, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti,Al)N-Mehrlagen-Schicht.

Besonders bevorzugt kann es sich hier um eine Verschleißschutzschicht handeln, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 80 %, beispielsweise 15 bis 35 % oder 17 bis 25 %und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau eilagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Der Formkopf 18, 118 und/oder der Schaft bzw. das das gesamte Werkzeug 10 der gezeigten Ausführungsbeispiele kann aus unterschiedlichsten Materialien bestehen, besonders vorteilhaft ist aber ein Material, das eine große Stabilität und Verschleißfestigkeit aufweist. Der Schaft des Werkzeugs sollte eine besonders hohe Biegefestigkeit haben, damit die radial auf den Formkopf 18, 118 einwirkenden Kräfte gut abgefangen werden können, was der Herstellungsgenauigkeit des Gewindes zugute kommt .

Auch bei dem hier vorliegenden Beanspruchungsprofil können die Kriterien Abriebverschleiß und Warmhärte von entscheidender Bedeutung sein, so dass auch Cermet-Sorten, wie z.B. ein Cermet der Sorte "HTX" , das von der Firma Kennametal-Hertel vermarktet wird, gut eingesetzt werden kann. Gute Ergebnisse erzielt man darüber hinaus mit den Sorten "SC30" der Herstellerfirma Cerasiv GmbH (Feldmühle) und "Tungaly NS530" der Firma Toshiba Europa GmbH.

Besonders bevorzugt als Material für das Werkzeug ist die Verwendung eines Hartstoffs, wie z. B. eines Carbids, eines Nitrids, eines Borids oder eines nichtmetallischen Hartstoffs bzw. eines Hartstoffsystems, wie es beispielsweise auch in Form von Mischcarbiden, Carbonnitriden, Carbid-Borid-Kombinationen oder Mischkeramik und Nitridkeramik bekannt geworden ist. Dabei können auch diejenigen Hartstoffe eingesetzt werden, die als Sinter-Formteile herstellbar sind.

Der Formkopf 18, 118 besteht bei der Ausgestaltung nach den Figuren 1 bis 5 aus Vollhartmetall, er kann aber auch aus einem anderen Hartstoff, also auch beispielsweise aus einem Cermet-Sinter-Formteil hergestellt sein, in das die Geometrie des Formkopfs, d.h. die Polygonform des Kerns und/oder die Formrillen bereits vor dem Sintern eingebracht sind. Dies kann beispielsweise durch geeignete Formen beim Pressvorgang geschehen oder aber durch eine geeignete Nachbearbeitung des Sinterrohlings vor dem Sintervorgang. Damit kann also der Sinter-Rohling mit einem geringen Aufmaß bezogen auf den Nenndurchmesser vorgefertigt sein. Dabei genügt es beispielsweise, das Aufmaß im Bereich von etwa 0.5 mm bezogen auf die Endmaße zu beschränken. Es ist sogar möglich, die polygonform des Kernabschnitts des Formkopfs im Bereich zwischen den Polygonkanten bereits im Urformprozess mehr oder weniger auf Endmaß vor zu formen, so dass eine Schleif-Bearbeitung auf Endmaß in diesem Bereich nach dem Sintervorgang sogar entfallen kann. Ein Schleifen auf Endmaß ist somit lediglich noch im Bereich der Formzähne 18, 118 erforderlich.

Aufgrund der sehr hohen Werte von Druckfestigkeit, Biegefestigkeit und E-Modul von Hartstoffen, insbesondere von Hartmetall oder Cermet, verformt sich der Schaft , wenn er aus derartigen Werkstoffen hergestellt ist, auch bei sehr großen Radialkräften, die über die gesamte Länges des Formkopfs einwirken, nur sehr geringfügig, so dass die Formgenauigkeit auch dann auf einem sehr guten Niveau gehalten werden kann, wenn besonders schwer zu verformende Werkstoffe bearbeitet werden.

Es hat sich gezeigt, dass auch der Werkstoff Cermet für den Formkopf 18, 118 besonders geeignet ist. Der Werkstoff hat eine geringe chemische Affinität zu Stahllegierungen, einen geringeren Wärmeleitkoeffizient, eine höhere Wärmhärte und ein verhältnismäßig feinkörniges Gefüge, so dass kleine Formkantenradien erzielbar sind. Der im Vergleich zu Hartmetall um den Faktor 7 kleinere Wärmeleitkoeffizient von Cermet bewirkt, dass die erzeugte Verformungswärme nicht unmittelbar in den Formkopf fließt und somit niedrigere Betriebstemperaturen am Werkzeug auftreten, was wiederum eine höhere Maßkonstanz über den gesamtem Formprozess ermöglicht.

Die Erfindung ist aber nicht auf ein bestimmtes Material für den Formkopf und/oder Schaft oder auf eine bestimmte Hartstoff- , wie z.B. Cermet-Qualität beschränkt, die der Durchschnittsfachmann je nach Einsatzgebiet des Werkzeugs aus dem inzwischen breitgefächerten Angebot der Hartstoffe auswählt.

Insbesondere die Sorte "HTX" zeigt besonders hohe Standzeiten, d. h. einen sehr geringen Volumenverschleiß, gegenüber anderen Cermet-Sorten beim Formvorgang, insbesondere beim Formen ohne Schmierung. Der Sinterwerkstoff kann aber ebenso nach anderen Kriterien ausgewählt werden, wie z. B. nach der erwünschten Biegefestigkeit oder nach dem jeweiligen zu bearbeitenden Werkstoff. So hat sich beispielsweise für die Bearbeitung von Guss und Aluminium der Werkstoff Hartmetall in der sogenannten K-Qualität als besonders günstig bezüglich der erzielbaren Standzeit erwiesen.

Der Werkstoff für den Schaft kann entsprechend einer Variante auch so ausgewählt werden, dass sich eine geringe Schwingungsneigung ergibt. Hier können deshalb auch herkömmliche Vergütungsstähle und Werkzeugstähle zur Anwendung kommen, beispielsweise der Vergütungsstahl 42CrMo4 mit Zugfestigkeiten 1000 N/mm² < *sigma* < 1500 N/mm².

Selbstverständlich sind Abweichungen von den vorstehend beschriebenen Varianten des Werkzeugs und des Verfahrens möglich, ohne den Grundgedanken der Erfindung zu verlassen.

So kann die Kinematik der Bewegung des Werkzeugs bezüglich des Werkstücks selbstverständlich umgekehrt werden, so dass beispielsweise das Werkstück die Bewegung der Einfahrschleife und/oder der Zirkularbewegung ausführt.

Die Polygonform im Formkopf muß auch nicht zwingend bereits vor einem Sintervorgang eingebracht werden. Es ist gleichermaßen möglich, die Rohfrom des Kopfs mit seiner Polygonquerschnittsgesteltung und/oder der Profilvorsprünge nach dem Sintervorgang in den Schneidkopf einzubringen.

Der Formkopf bzw. das gesamte Werkzeug kann auch aus anderen Materialien bestehen, vorteilhafterweise aus einem hochfesten Werkstoff, wie z. B. aus Hartmetall, Schnellstahl wie z. B. HSS, HSSE oder HSSEBM, Keramik, Cermet oder aus einem anderen Sintermetall-Werkstoff.

Ferner ist es möglich, eine Kühl- und Schmiermittel-Versorgung - auch innenliegend - vorzusehen.

Die Erfindung ist ferner auch dann anwendbar, wenn die axiale Länge des zu formenden Gewindes die Länge des Formkopfes 18, 118 überschreitet. In diesem Fall wird die Bewegungskinematik der Figur 4 mehrfach hintereinander, d.h. mit axialer Staffelung der Gewindeformung durchgeführt.

Grundsätzlich ist das vorstehend beschriebene Formprinzip auch auf die Herstellung von Außengewinden anwendbar.

Die Erfindung schafft demnach ein Werkzeug zur Herstellung von Gewinden, insbesondere von Innengewinden, das ein Herstellungsverfahren ermöglicht, bei dem die Innenoberfläche (16) einer Werkstückbohrung mittels spanloser Druckumformung bearbeitet wird. Das Werkzeug hat einen Formkopf (18; 118) mit zumindest zwei nach der Art eines Gewindefräsers ausgebildeten und in konstantem axialen Abstand (T) zueinander stehenden Profilvorsprüngen (20), die über den Umfang durchgehend und mit sich über den Umfang verändernder radialer Erstreckung (ERMIN, ERMAX) ausgebildet sind, so dass im Bereich eines jeden Profilvorsprungs (20) über den Umfang zumindest ein Drückstollen (22; 122) entsteht. Die Profilvorsprünge (20) bilden mit der sich über den Umfang ändernden radialen Erstreckung (ERMIN, ERMAX) über den Umfang jeweils mehrere Drückstollen (22; 122) aus. Die Drückstollen (122) benachbarter Profilvorsprünge sind in Umfangsrichtung zueinander versetzt. Um Gewinde unterschiedlicher Nenndurchmesser besonders wirtschaftlich und mit verbesserter Gefügequalität im Bereich des Gewindes herstellen zu können, wird das Gewinde dadurch gebildet, dass das Werkzeug zunächst an einer Umfangsstelle der Werkstückbohrung in das Werkstück eingefahren wird, vorzugsweise auf volle Gewindetiefe gebracht wird, und unter Beibehaltung der zur Achse der Werkstückbohrung eingestellten Exzentrizität der Drehachse eine 360° durchlaufende Relativ-Kreisbewegung (Zirkularbewegungs) bezüglich der Achse der Werkstückbohrung ausführt, während der Formkopf gleichzeitig eine konstante axiale Relativ-Vorschubbewegung um das Maß der herzustellenden Gewindsteigung ausführt.

## Patentansprüche

1. Drehantreibbares Werkzeug zur Herstellung von Gewinden, insbesondere von Innengewinden, mittels spanloser Druckumformung der Innenoberfläche (16) einer Werkstückbohrung, mit einem Formkopf (18; 118) mit zumindest zwei nach der Art eines Gewindefräsers ausgebildeten und in konstantem axialen Abstand (T) zueinander stehenden Profilvorsprüngen (20), die über den Umfang durchgehend und mit sich über den Umfang verändernder radialer Erstreckung (ERMIN, ERMAX) ausgebildet sind, so dass im Bereich eines jeden Profilvorsprungs (20) über den Umfang zumindest ein Drückstollen (22; 122) entsteht, wobei die Profilvorsprünge (20) mit der sich über den Umfang ändernden radialen Erstreckung (ERMIN, ERMAX) über den Umfang jeweils mehrere Drückstollen (22; 122) ausbilden, **dadurch gekennzeichnet, dass** die Drückstollen (122) benachbarter Profilvorsprünge in Umfangsrichtung zueinander versetzt (Wendel W) sind.

2. Werkzeug nach Anspruch 11, **dadurch gekennzeichnet, dass** die Profilvorsprünge (20) axial zueinander um das Maß (T) der herzustellenden Gewindsteigung (P) versetzt sind.

3. Werkzeug nach Anspruch 1 oder 2, **dadurch gekennzeichnet, dass** der Formkopf (18; 118) eine axiale Erstreckung (EA) hat, die im Wesentlichen der Länge (TG) des zu erzeugenden Gewindes entspricht.

4. Werkzeug nach einem der Ansprüche 1 bis 3, **dadurch gekennzeichnet, dass** die Drückstollen (22; 122) über den Umfang ungleich verteilt sind.

5. Werkzeug nach einem der Ansprüche 1 bis 4, **dadurch gekennzeichnet, dass** die axial benachbarten Drückstollen (122) des Formkopfs (118) jeweils entlang einer Wendel (W) liegen.

6. Werkzeug nach einem der Ansprüche 1 bis 5, **dadurch gekennzeichnet, dass** die Tiefe (RT) der Nuten (42) zwischen benachbarten Profilvorsprüngen (20) über den Umfang variiert.

7. Werkzeug nach einem der Ansprüche 1 bis 5, **dadurch gekennzeichnet, dass** die Tiefe (RT) der Nuten (42) zwischen benachbarten Profilvorsprüngen (20) über den Umfang im Wesentlichen gleich bleibt.

8. Werkzeug nach einem der Ansprüche 1 bis 7, **dadurch gekennzeichnet, dass** es aus einem hochfesten Werkstoff, vorzugsweise aus einem Hartstoff, insbesondere einem Hartmetall-Werkstoff oder einem amderen hochfesten Sinterwerkstoff besteht.

9. Werkzeug nach einem der Ansprüche 1 bis 8, **dadurch gekennzeichnet, dass** es einen Werkzeugträger aus einem Trägermaterial aufweist, in den zumindest eine, vorzugsweise zumindest zwei Werkzeugleisten aus einem anderen Material aufgenommen sind.

10. Werkzeug nach einem der Ansprüche 1 bis 9, **dadurch gekennzeichnet, dass** der Formkopf (18; 118) zumindest im Bereich der Drückstollen (22; 122) mit einer Beschichtung versehen ist, vorzugsweise in der Ausgestaltung als Hartstoffschicht, wie z.B. aus Diamant, vorzugsweise nanokristallinem Diamant, aus TiN TiN, TiAlN, oder TiCN oder einer Mehrlagen-Schicht oder einer Schmierstoffschicht, beispielsweise aus MoS2 versehen ist.

11. Werkzeug nach Anspruch 10, **dadurch gekennzeichnet, dass** die Schicht aus Nitriden mit den Metallkomponenten Cr, Ti und Al sowie mit der Komponente C und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 80 %, beispielsweise 15 bis 35 % oder 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht.

12. Werkzeug nach Anspruch 11, **dadurch gekennzeichnet, dass** der Aufbau der gesamten Schicht aus einer homogenen Mischphase besteht.

13. Werkzeug nach Anspruch 11 oder 12, **dadurch gekennzeichnet, dass** der Aufbau der gesamten Schicht aus mehreren in sich homogenen Einzellagen besteht, die abwechselnd einerseits aus (TiₓAlyY_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

14. Verwendung eines Werkzeugs nach einem der Ansprüche 1 bis 13 in einer Vorrichtung zur Herstellung von Gewinden, insbesondere von Innengewinden, mit einer Antriebsspindel für den drehangetriebenen Gewindeformer und einer Dreiachsensteuerung, mit der die Vorschubbewegung entlang der Werkzeugachse, die Ein- und Ausfahrbewegungen des Gewindeformers in und außer Eingriff mit dem Werkstück und die Zirkularbewegung synchronisiert ausführbar sind.

15. Verwendung des Werkzeugs nach einem der Ansprüche 1 bis 13 mit einer Vorrichtung nach Anspruch 14, **dadurch gekennzeichnet, dass** die Dreiachsensteuerung von einer 3-D-CNC-Werkzeugmaschine bereitgestellt ist.

16. Verwendung des Werkzeugs nach einem der Ansprüche 1 bis 15 bei einem Verfahren, mit dem die Gewindegänge (34) spanlos durch Druckumformung in und aus der Oberfläche des Werkstücks, insbesondere in und aus der Innenoberfläche (16) einer Werkstückbohrung heraus getrieben werden, wobei das Gewinde (34) dadurch gebildet wird, dass das Werkzeug (10), bei dem die Profilvorsprünge (20) an seinem Formkopf (18; 118) über den Umfang durchgehend und mit sich über den Umfang verändernder radialer Erstreckung (ERMIN, ERMAX) polygon ausgebildet sind, in eine Werkstück-Bohrung mit größerem Durchmesser eingebracht und unter Drehung mit vorbestimmtem axialen Vorschub entlang der Innenoberfläche der Werkstück-Bohrung bewegt wird, wobei das Schaftwerkzeug nach dem Einbringen in die Werkstück-Bohrung zunächst an einer Umfangsstelle (SU) der Werkstückbohrung (16) in das Werkstück radial eingefahren wird, vorzugsweise auf volle Gewindedrücktiefe gebracht wird, und im Wesentlichen unter Beibehaltung der zur Achse (30) der Werkstückbohrung (16) eingestellten Exzentrizität (EX) der Drehachse (14) eine 360° durchlaufende Relativ-Kreisbewegung (Zirkularbewegung BZ) bezüglich der Achse (30) der Werkstückbohrung (16) ausführt, während der Formkopf (18; 118) synchron eine konstante axiale Relativ-Vorschubbewegung um das Maß der herzustellenden Gewindsteigung (P) ausführt.

17. Verwendung nach Anspruch 16 bei einem Verfahren, bei dem der Formkopf (18; 118) im Wesentlichen zentrisch in die Werkstückbohrung (16) auf das Maß der Gewindetiefe (TG) eingefahren wird, anschließend unter Beibehaltung der axialen Relativposition zur Werkstückbohrung (16) radial nach außen verfahren wird, bis an einer Umfangsstelle (SU) zwischen benachbarten Profilvorsprüngen (20) ein Gewindezahn voll ausgebildet ist, dann die über 360° reichende Kreisbewegung (Zirkularbewegung BZ) bei gleichzeitigem Axialvorschub (BV) ausführt und schließlich radial nch innen gefahren wird, so dass die Profilvorsprünge (20) des Formkopfs (18; 118) außer Eingriff mit dem hergestellten Innengewinde (34) gelangen.

18. Verwendung nach Anspruch 17, **dadurch gekennzeichnet, dass** die radial nach außen gerichtete Bewegung des Formkopfs (18; 118) entlang einer bogenförmigen Kurve (ES) erfolgt.

19. Verwendung nach Anspruch 18, **dadurch gekennzeichnet, dass** die bogenförmige Kurve beim Eintreten der Profilvorsprünge (20) in das Werkstück eine Bewegungskomponente in Richtung der sich anschließenden Zirkularbewegung (BZ) hat.

20. Verwendung nach einem der Ansprüche 14 bis 19, **dadurch gekennzeichnet, dass** die Umfangsgeschwindigkeit des Formkopfs (18; 118) im Eingriffsbereich mit dem Werkstück (16) mit der Zirkularbewegung synchronisiert ist.

21. Verwendung nach einem der Ansprüche 14 bis 19, **dadurch gekennzeichnet, dass** die Umfangsgeschwindigkeit des Formkopfs (18; 118) im Eingriffsbereich mit dem Werkstück (16) der Zirkularbewegung entgegen gerichtet ist.

22. Sinterrohling zur Herstellung eines Werkzeugs nach einem der Ansprüche 1 bis 13, inbesondere für den Formkopf des Gewindeformers, der im gleichmäßigen Axialabstand zueinander liegende und mit Aufmaß behaftete Profilvorsprünge mit vorgeformten Drückstollen hat, die nach dem Sinterprozess auf Endmaß bearbeitbar, vorzugsweise schleifbar sind.
